# EUROPEAN PATENT SPECIFICATION

(11) **EP 3 614 168 B1**
(45) Date of publication and mention of the grant of the patent: **24.02.2021**
(21) Application number: 18852773.3
(22) Date of filing: 28.06.2018
(51) Int. Cl.: G01S 7/40, B60W 30/12, B60W 30/14, G01B 11/27, G01B 11/275, G01S 13/931

(54) **ADVANCED DRIVER ASSISTANCE CALIBRATION DEVICE FOR VEHICLE**
VORRICHTUNG ZUR KALIBRIERUNG VON FAHRZEUGFAHRASSISTENZSYSTEMEN
DISPOSITIF DE CALIBRAGE D'UN SYSTÈME D'ASSISTANCE À LA CONDUITE DES VÉHICULES

(43) Date of publication of application: 26.02.2020
(73) Proprietor: Launch Tech Co., Ltd, Longgang District Shenzhen Guangdong 518129 (CN)
(72) Inventor: LIU, Jun, Guangdong 518129 (CN); ZHONG, Yibin, Guangdong 518129 (CN); LI, Jianfeng, Guangdong 518129 (CN)
(74) Representative: Dauncey, Mark Peter
(86) International application number: PCT/CN2018/093306
(87) International publication number: WO 2020/000297

(56) References cited:
- EP-A1- 2 113 787
- EP-A1- 2 998 718
- EP-A2- 0 263 089
- WO-A1-2018/067354
- AU-A- 3 064 277
- CN-A- 106 382 922
- CN-A- 107 672 594
- CN-A- 107 843 883
- CN-A- 107 918 114
- CN-A- 108 120 966
- DE-A1- 1 448 410
- DE-A1-102009 009 046
- DE-C1- 19 927 573
- DE-U1-202015 008 954
- DE-U1-202016 103 584
- KR-A- 20150 034 399
- KR-A- 20150 056 343

## Description

### TECHNICAL FIELD

The present disclosure relates to a field of vehicle technology. More specifically, the present disclosure relates to an advanced driver assistance calibration device for vehicle.

### BACKGROUND

An adaptive cruise control system and a lane departure warning system are two subsystems of an advanced driver assistance system for vehicle. They use radar sensors and cameras to identify and detect the external environment of the vehicle, and transmit static or dynamic result data back to an electronic control unit of the vehicle for calculation processing, so that the driver can detect possible dangers at the fastest time, draw attention to the dangers and improve safety.

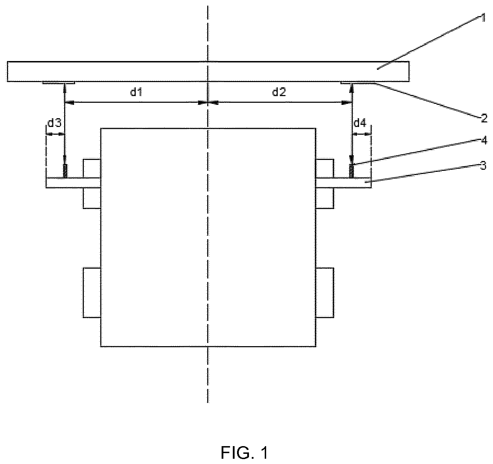

When calibrating the radar sensors and cameras, firstly, a target device is parallel to the front wheel axis of the vehicle and a coincidence adjustment operation between a center line of the target device and a central axis of the vehicle moving direction is carried out, and then a self-owned diagnostic device is used to communicate with the electronic control unit of vehicle for software calibrating. The coincidence adjustment operation in the prior art is as shown in FIG 1. Laser wheel clamps 3 are respectively arranged on the left and right wheels of the vehicle, and the laser wheel clamps 3 are provided with a laser 4 and a scale. A plane of a reflective mirror 2 on a crossbeam of the target device 1 is attached on a vertical plane of the crossbeam and positioned above the crossbeam. Laser beams emitted by the laser 4 are irradiated onto the scale of the crossbeam of the target device, and values of d1 and d2 are generated at this time, and the target device 1 is adjusted so that d1=d2. Then the laser emission angle is adjusted, so that the laser beams are irradiated to the reflective mirror 2 and the beams are reflected to the scale, and the values of d3 and d4 are observed, and then the target device 1 is adjusted so that d3=d4 and d1=d2. In the prior art, the reflective mirror is used, and the target device and the emission angle of the laser need to be adjusted at the same time, so that the installation and adjustment operations are complicated.

Examples of such a device are given by DE 20 2016 103584 U1, EP 2 113 787 A1, DE 20 2015 008954 U1, EP 2 998 718 A1, and DE 199 27 573 C1.

Therefore, how to simplify the installation and adjustment operation of the advanced driver assistance calibration device for vehicle is a problem to be solved by those skilled in the art.

### SUMMARY

The purpose of the present disclosure is to provide an advanced driver assistance calibration device for vehicle that simplifies the installation and adjustment operation of the advanced driver assistance calibration device for vehicle.

To achieve the above object, the present disclosure provides an advanced driver assistance calibration device for vehicle as claimed in claim 1.

The crossbeam of the target device disclosed herein is horizontal when the advanced driver assistance calibration device for vehicle is in a hardware calibration process, and the distance between the first laser and the second laser is adapted to the width of the vehicle so that the reading of the third scale is equal to the reading of the fourth scale, and the reading of the first scale is equal to the reading of the second scale.

When the advanced driver assistance calibration device for vehicle is in a software calibration process, the advanced driver assistance calibration device for vehicle disclosed herein further comprises:
a software calibration device for software calibration on a camera and radar sensor of the vehicle;
wherein the vehicle is coupled to the software calibration device via a diagnostic connector.

The software calibration device disclosed herein comprises:
a memory storing an executable computer program;
a processor which is coupled with the memory for selecting a target computer program according to the type of the vehicle and executing the target computer program to perform software calibration on the camera and the radar sensor of the vehicle.

The software calibration device disclosed herein further comprises:
a display unit for displaying a calibration result of the camera and the radar sensor.

The processor disclosed herein is also used to update the computer program according to the type of vehicle.

When the advanced driver assistance calibration device for vehicle is in a camera calibration process of the software calibration process, the height of the target device is adapted to the type of the vehicle, and a camera target pattern is fixed on the crossbeam of the target device.

When the advanced driver assistance calibration device for vehicle is in a radar sensor calibration process of the software calibration process, a radar laser is fixed on the target device, and laser light emitted by the radar laser is irradiated to a center of the radar sensor.

According to the above embodiments, the present disclosure provides the advanced driver assistance calibration device for vehicle, comprising the target device, and the first laser wheel clamp and the second laser wheel clamp respectively disposed on two front wheels of the vehicle; the first scale and the second scale which are disposed on the target device, and which are symmetrically distributed on both sides of a center of a crossbeam of the target device; wherein the third scale and the fourth scale are disposed on the first laser wheel clamp and the second laser wheel clamp respectively, and the first laser and the second laser are disposed on the first scale and the second scale respectively.

The advanced driver assistance calibration device for vehicle provided by the present disclosure uses two pairs of lasers respectively mounted on the wheel clamps and the target device. When performing the horizontal coincidence adjustment between the target device and the vehicle, it is only necessary to adjust the position of the target device so that the reading of the third scale is equal to the reading of the fourth scale, and the reading of the first scale is equal to the reading of the second scale. Compared with the prior art that uses the reflective mirror and needs to adjust the target device and the emission angle of the laser at the same time, the disclosure has the advantages of simple structure, and convenient installation and adjustment.

### BRIEF DESCRIPTION OF THE DRAWINGS

In order to more clearly illustrate the embodiments of the present disclosure or prior art, the following figures will be described in the embodiments are briefly introduced..
FIG. 1 is a structural diagram of an advanced driver assistance calibration device for vehicle in the prior art;
FIG. 2 is a is a top view of an advanced driver assistance calibration device for vehicle according to an embodiment of the present disclosure;
FIG. 3 is a perspective structural view of an advanced driver assistance calibration device for vehicle according to an embodiment of the present disclosure;
FIG. 4 is a front view of a target device according to an embodiment of the present disclosure;
FIG. 5 is a front view of a crossbeam device of a target device according to an embodiment of the present disclosure;
FIG. 6 is a structural diagram of a laser wheel clamp according to an embodiment of the present disclosure;
FIG. 7 is a flowchart of a specific application of an advanced driver assistance calibration device for vehicle according to an embodiment of the present disclosure.

### DETAILED DESCRIPTION OF ILLUSTRATED EMBODIMENTS

In order to make those skilled in the art understand the technical solutions of present disclosure better, clear and complete, description of the technical solutions of present disclosure will be illustrated, which combined with the drawings of embodiments in present disclosure. Base on the embodiments of present disclosure, all other embodiments obtained by those skilled in the art without creative work are considered to be encompassed within the scope of the present disclosure.

The present disclosure discloses an advanced driver assistance calibration device for vehicle, which simplifies the installation and adjustment operation of the advanced driver assistance system calibration for vehicle.

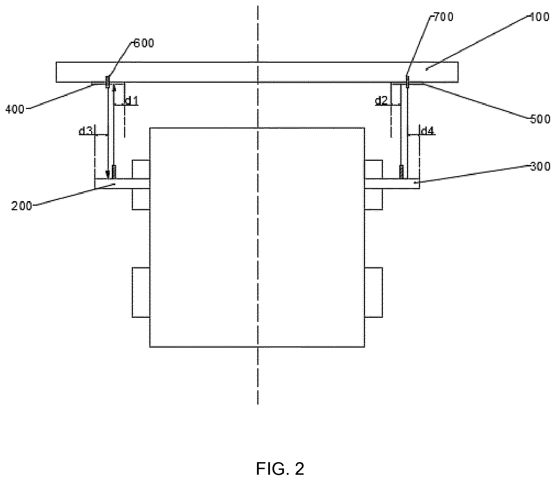

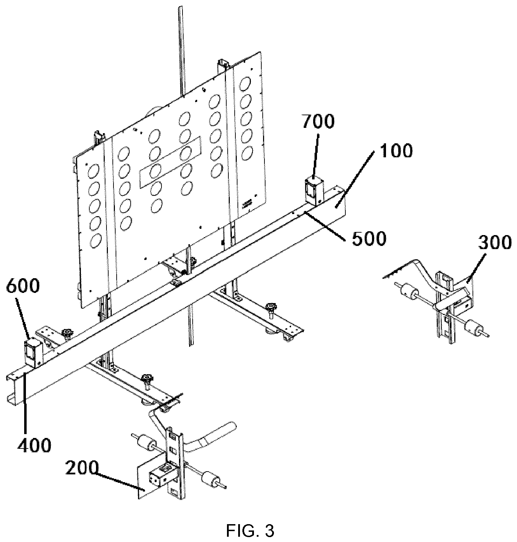

Referring to FIG. 2 to FIG. 3. FIG. 2 is a top view of an advanced driver assistance calibration device for vehicle according to an embodiment of the present disclosure. FIG. 3 is a perspective structural view of an advanced driver assistance calibration device for vehicle according to an embodiment of the present disclosure, which comprise a target device 100.

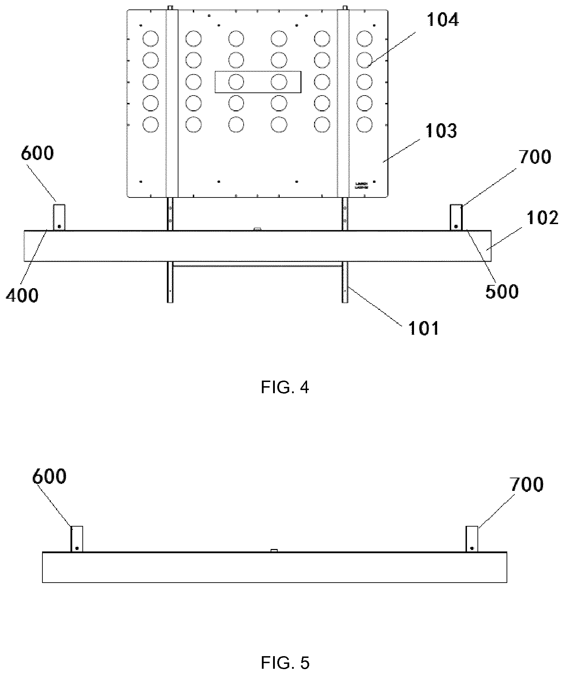

In a specific embodiment, the target device 100 shown in FIG. 4 is composed of a target bracket, a movable support frame 101 which can be locked or fine-tuned on height, a crossbeam device 102 whose height can be adjusted to multiple altitudes (shown in FIG. 5), a height-adjustable target 103, a target drawing 104 and a gradienter. The target comprises a rack-and-pinion device and an operating handle. The rack-and-pinion device is controlled by the operating handle to adjust the height of target, and the gradienter is used to adjust the levelness of the target device.

A first laser wheel clamp 200 and a second laser wheel clamp 300 are respectively disposed on the two front wheels of the vehicle, wherein the first laser wheel clamp and the second laser wheel clamp are provided with a third scale and a fourth scale.

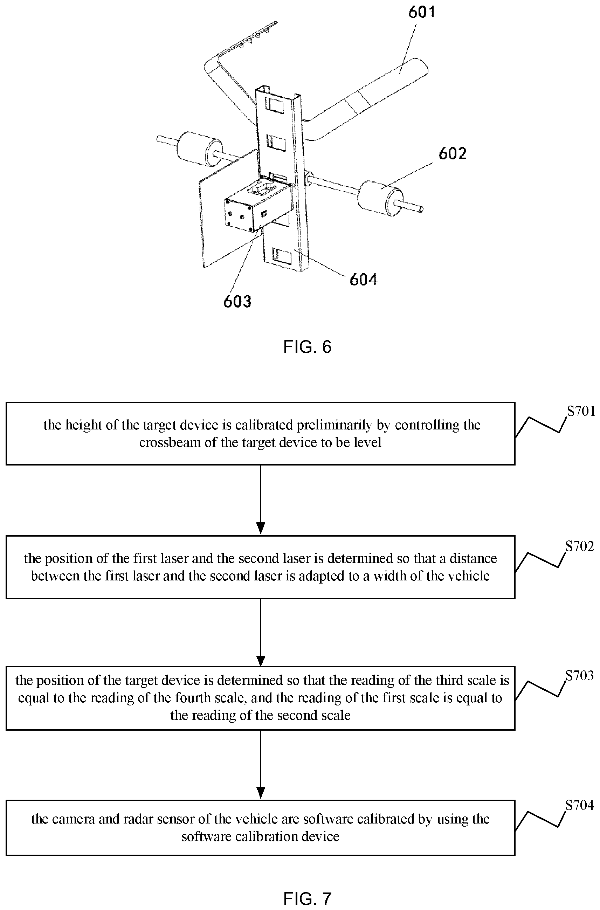

In a specific embodiment, the laser wheel clamps 200 and 300 shown in FIG 6 are composed of a wheel claw 601, a fixing rod 602 of a scale plate, a laser 603, and a fastening rod 604 from top to bottom. The laser 603 is adjustable in height direction, with fixed horizontally emission direction, which the height direction is perpendicular to the fastening rod. The fixing rod 602 of the scale plate is provided with a sliding groove for supporting continuous sliding, and the third scale and the fourth scale can be fixed to the sliding groove by a locking screw. The laser 603 is mounted on the scale plate and perpendicular to the plane of the scale plate, and the scale plate is marked with a reference line indicating graduations.

A first scale 400 and a second scale 500 are disposed on the target device, which are symmetrically distributed on both sides of a center of a crossbeam of the target device, wherein the first laser 600 and the second laser 700 are respectively disposed on the first scale and the second scale.

In a specific embodiment, the crossbeam device of the target device 100 comprises a first scale 400, a second scale 500, and a plurality of laser component fixing holes, which are disposed on the target device, and which are symmetrically distributed on both sides of the center. The first scale 400 and the second scale 500 are attached to the vertical plane of the crossbeam and marked with a reference line indicating graduations.

The crossbeam of the target device is horizontal when the advanced driver assistance calibration device for vehicle is in a hardware calibration process. The distance between the first laser and the second laser is adapted to the width of the vehicle so that the reading of the third scale is equal to the reading of the fourth scale, and the reading of the first scale is equal to the reading of the second scale.

In a specific embodiment, two lasers on the laser wheel clamps are turned on, so that laser beams are irradiated onto the first scale and the second scale of the crossbeam. By comparing the scale readings of irradiated points, the position of the target device is adjusted to make the reading of the first scale equal the reading of the second scale, that is, make d1=d2, so that the central axis of the moving direction of vehicle passes through the center point of the target device.

According to the positions of the third scale and the fourth scale on the laser wheel clamps, the laser component fixing holes on the crossbeam are selected, and the first laser and the second laser are respectively mounted on the fixing holes symmetrically disposed at both ends of the crossbeam. The distribution of emission direction of the first laser and the second laser faces the first laser wheel clamp and the second laser wheel clamp, and the first laser and the second laser are perpendicular to the crossbeam plane.

The first laser and the second laser are turned on, so that the laser beams are illuminated onto the scale plate on the laser wheel clamps. By observing the scale readings of the illumination point, the crossbeam position of the target device is fine-tuned to make the reading of the third scale equal the reading of the fourth scale, that is, make d3=d4, and d1 and d2 are observed again to make d1=d2 under the condition that d3=d4, and thus the horizontal coincidence adjustment operation between the target device and the vehicle is completed.

The advanced driver assistance calibration device for vehicle provided by the embodiment of the present disclosure uses two pairs of lasers respectively mounted on the wheel clamps and the target device. When performing the horizontal coincidence adjustment operation between the target device and the vehicle, it is only necessary to adjust the position of the target device so that the reading of the third scale is equal to the reading of the fourth scale, and the reading of the first scale is equal to the reading of the second scale. Compared with the prior art that uses the reflective mirror and needs to adjust the target device and the emission angle of the laser at the same time, the disclosure has the advantages of simple structure, and convenient installation and adjustment.

Based on the above embodiments, as an optional embodiment, the advanced driver assistance calibration device for vehicle also has a software calibration process. Specifically, when the advanced driver assistance calibration device for vehicle is in a software calibration process, the advanced driver assistance calibration device for vehicle further comprises:
a software calibration device for software calibration on a camera and radar sensor of the vehicle;
wherein the vehicle is coupled to the software calibration device via a diagnostic connector.

In a specific embodiment, after completing the horizontal coincidence adjustment operation between the target device and the vehicle, the software calibration on the camera and the radar sensor of the vehicle is also required. The diagnostic connector can be plugged into an interface of an OBD-II (English full name: On-Board Diagnostic) of the vehicle. The software calibration device can be connected to the diagnostic connector via Bluetooth, USB or other means to establish a communication between the vehicle and the software calibration device. The calibration diagnostic software in a diagnostic device is run and the software calibration instruction is sent to the electronic control unit of ADAS (English full name: Advanced Driver Assistance Systems) of the vehicle.

The software calibration device can comprises:
a memory storing an executable computer program;
a processor which is coupled with the memory for selecting a target computer program according to the type of the vehicle and executing the target computer program to perform software calibrating on the camera and the radar sensor of the vehicle.

Based on the above embodiments, as an optional embodiment, the software calibration device further comprises:
a display unit for displaying a calibration result of the camera and the radar sensor.

It should be noted that the display unit can not only display the calibration result of the camera and the radar sensor, but also display the accuracy of the hardware calibration.

Based on the above embodiments, as an optional embodiment, the processor is also used to update the computer program according to the type of vehicle.

Understandably, due to the different calibration diagnostic software used by different types of vehicle, even the same type of vehicle, the calibration diagnostic software may be upgraded due to changes in the vehicle communication protocol or optimization of software itself. The latest release version of the current calibration diagnostic software can be queried from the background of website via the https protocol. If the release version is newer than the local version of the diagnostic device, the software can be downloaded and upgraded.

Based on the above embodiments, as an optional embodiment, when the advanced driver assistance calibration device for vehicle is in a camera calibration process of the software calibration process, the height of the target device is adapted to the type of the vehicle, and a camera target pattern (ie, the pattern on the target drawing 104 in FIG. 4) is fixed on the crossbeam of the target device.

In a specific embodiment, the height of the target is adjusted to the height value required by the vehicle type, and the camera target pattern corresponding to the vehicle type is closely attached to the target plane, and then a communication is established between the software calibration device and the vehicle. The calibration diagnostic software in the diagnostic device is run, and the software calibration instruction is sent to the electronic control unit of ADAS of the vehicle to complete the calibration task of LDW (English full name: Lane departure warning system) of the vehicle.

Based on the above embodiments, as an optional embodiment, when the advanced driver assistance calibration device for vehicle is in a radar sensor calibration process of the software calibration process, a radar laser is fixed on the target device, and laser light emitted by the radar laser is irradiated to a center of the radar sensor.

In a specific embodiment, the height of the crossbeam device is adjusted to be close to the height of radar sensor in front of the vehicle as far as possible. A fixed component of the radar laser is hung on the crossbeam device, the radar laser is attached on the fixed component, and the position of the radar laser is adjusted, so that the laser beams emitted by the radar laser are irradiated to a center of the radar sensor in front of the vehicle, and then the same operation as described above is used to establish the communication between the diagnostic device and the vehicle, the calibration diagnostic software is run and the ACC (English full name: Adaptive cruise control)calibration function is executed according to the software operation tips, that is, the ACC calibration task of the vehicle is completed.

Specifically, an application method of the advanced driver assistance calibration device for vehicle is described as follows.

Referring to FIG. 7, a flowchart of a specific application of the advanced driver assistance calibration device for vehicle disclosed in the embodiment of the present disclosure comprises following steps.

Step S701, the height of the target device is calibrated preliminarily by controlling the crossbeam of the target device to be level.

In a specific embodiment, the target device is placed in front of the front part of the vehicle at a desired distance. A preliminary calibration on the height of the target device is performed by adjusting the height position of the crossbeam device, so that the height of the crossbeam device is close to the height of the wheel center of the vehicle as far as possible. The crossbeam device is adjusted to be level by means of the gradienter and the movable support frame which can be fine-tuned on height. The wheel is controlled in the forward position and the tire pressure reaches the standard air pressure.

It should be noted that all the steps in the specification do not limit the specific subject of the execution, that is, the steps can be completed manually, or can be automatically controlled by writing a computer program.

Step S702, the position of the first laser and the second laser is determined so that a distance between the first laser and the second laser is adapted to a width of the vehicle.

In a specific embodiment, the first laser wheel clamp and the second laser wheel clamp are fixed on the left and right front wheels of the vehicle respectively, and the positions of the first laser and the second laser are determined so that the distance between the first laser and the second laser is adapted to the width of the vehicle.

Step S703, the position of the target device is determined so that the reading of the third scale is equal to the reading of the fourth scale, and the reading of the first scale is equal to the reading of the second scale.

Step S704, the camera and radar sensor of the vehicle are software calibrated by using the software calibration device.

The various embodiments in the present specification are described in a progressive manner, and each embodiment focuses on differences from other embodiments, and the same or similar content between the various embodiments may be referred to each other.

The above description of the disclosed embodiments enables those skilled in the art to implement or use the disclosure. Various modifications to these embodiments are obvious to those skilled in the art, and the general principles defined herein may be implemented in other embodiments without departing from the spirit or scope of the disclosure. Therefore, the present disclosure is not limited to the embodiments shown herein, but the broadest scope consistent with the principles and novel features disclosed herein.

The various embodiments in the present specification are described in a progressive manner, and each embodiment focuses on differences from other embodiments, and the same or similar content between the various embodiments may be referred to each other. For the system disclosed in the embodiment, the description is relatively simple, and the relevant parts can be referred to the method part for description. It should be noted that those skilled in the art can make various modifications and changes to the present disclosure without departing from the present disclosure. These modifications and modifications are also within the scope of the claims of the present disclosure.

It should also be noted that in this specification, relational terms such as "first" and "second" are used merely to distinguish one entity or operation from another entity or operation, without necessarily requiring or implying that there is any such actual relationship or order between these entities or operations. Furthermore, the term "comprise", "include" or any other variants thereof is intended to encompass a non-exclusive inclusion, so that an article, or device comprising a plurality of elements comprises not only those elements but also other elements, or elements that are inherent to such article, or device. Without more restrictions, an element that is defined by the phrase "comprising a ..." does not exclude the presence of additional equivalent elements in the article or device that comprises the element.

## Claims

1. An advanced driver assistance calibration device for vehicle comprising a target device (100), and
a first laser wheel clamp (200) and a second laser wheel clamp (300) respectively disposed on two front wheels of the vehicle;
a first scale (400) and a second scale (500) disposed on the target device (100), which are symmetrically distributed on both sides of a center of a crossbeam (102) of the target device (100);
wherein a third scale and a fourth scale are disposed on the first laser wheel clamp (200) and the second laser wheel clamp (300) respectively, and a first laser (600) and a second laser (700) are disposed on the first scale (400) and the second scale (500) and configured to irradiate the third scale and the fourth scale respectively, and
wherein a third laser and a fourth laser are disposed on the first laser wheel clamp (200) and the second laser wheel clamp (300) and configured to irradiate the first scale and second scale respectively

2. The advanced driver assistance calibration device for vehicle according to claim 1, wherein the crossbeam (102) of the target device (100) is horizontal when the advanced driver assistance calibration device for vehicle operates in a mode of hardware calibration, and
the distance between the first laser (600) and the second laser (700) is adapted to the width of the vehicle so that the reading of the third scale is equal to the reading of the fourth scale, and the reading of the first scale (400) is equal to the reading of the second scale (500).

3. The advanced driver assistance calibration device for vehicle according to claim 1, wherein,
when the advanced driver assistance calibration device for vehicle operates in a mode of software calibration, it further comprises:
a software calibration device for software calibration on a camera and a radar sensor of the vehicle;
wherein the vehicle is coupled to the software calibration device via a diagnostic connector.

4. The advanced driver assistance calibration device for vehicle according to claim 3, wherein the software calibration device comprises:
a memory storing an executable computer program;
a processor which is coupled with the memory for selecting a target computer program according to the type of the vehicle and executing the target computer program to perform software calibration on the camera and the radar sensor of the vehicle.

5. The advanced driver assistance calibration device for vehicle according to claim 4, wherein the software calibration device further comprises:
a display unit for displaying a calibration result of the camera and the radar sensor.

6. The advanced driver assistance calibration device for vehicle according to claim 4, wherein the processor is also configured to update the computer program according to the type of vehicle.

7. The advanced driver assistance calibration device for vehicle according to claim 3, when the advanced driver assistance calibration device for vehicle operates in a mode of camera calibration of the software calibration, the height of the target device (100) is configured to be adapted to the type of the vehicle, and wherein a camera target pattern is fixed on the crossbeam (102) of the target device (100).

8. The advanced driver assistance calibration device for vehicle according to claim 3, when the advanced driver assistance calibration device for vehicle operates in a mode of radar sensor calibration of the software calibration, a radar laser is fixed on the target device (100) and is configured to emit laser light and to irradiate it to a center of the radar sensor.

## Patentansprüche

1. Verbesserte Fahrerassistenzkalibrierungsvorrichtung für ein Fahrzeug, umfassend eine Zielvorrichtung (100), und
eine erste Laserradklemme (200) und eine zweite Laserradklemme (300), welche jeweils auf zwei Vorderräder des Fahrzeugs angeordnet sind;
eine erste Waage (400) und eine zweite Waage (500), welche auf der Zielvorrichtung (100) angeordnet sind und welche symmetrisch auf beiden Seiten eines Mittelpunkts eines Querträgers (102) der Zielvorrichtung (100) verteilt sind;
wobei eine dritte Waage und eine vierte Waage jeweils auf der ersten Laserradklemme (200) und der zweiten Laserradklemme (300) angeordnet sind, und wobei ein erster Laser (600) und ein zweiter Laser (700) auf der ersten Waage (400) und auf der zweiten Waage (500) angeordnet und konfiguriert sind, um jeweils die dritte Waage und die vierte Waage zu bestrahlen, und
wobei ein dritter Laser und ein vierter Laser auf der ersten Laserradklemme (200) und der zweiten Laserradklemme (300) angeordnet und konfiguriert sind, um jeweils die erste und die zweite Waage zu bestrahlen.

2. Verbesserte Fahrerassistenzkalibrierungsvorrichtung für ein Fahrzeug nach Anspruch 1, wobei der Querträger (102) der Zielvorrichtung (100) horizontal ist, wenn die verbesserte Fahrerassistenzkalibrierungsvorrichtung für ein Fahrzeug in einem Hardware-Kalibrierungsmodus betrieben wird, und
wobei der Abstand zwischen dem ersten Laser (600) und dem zweiten Laser (700) an die Breite des Fahrzeugs angepasst ist, sodass die Ablesung der dritten Waage gleich der Ablesung der vierten Waage ist, und die Ablesung der ersten Waage (400) gleich der Ablesung der zweiten Waage (500) ist.

3. Verbesserte Fahrerassistenzkalibrierungsvorrichtung für ein Fahrzeug nach Anspruch 1, wobei,
wenn die verbesserte Fahrerassistenzkalibrierungsvorrichtung für ein Fahrzeug in einem Software-Kalibrierungsmodus betrieben wird, diese ferner Folgendes umfasst:
eine Software-Kalibrierungsvorrichtung zur Software-Kalibrierung auf einer Kamera und einem Radarsensor des Fahrzeugs;
wobei das Fahrzeug mit der Software-Kalibrierungsvorrichtung über einen Diagnostikstecker gekoppelt ist.

4. Verbesserte Fahrerassistenzkalibrierungsvorrichtung für ein Fahrzeug nach Anspruch 3, wobei die Software-Kalibrierungsvorrichtung Folgendes umfasst:
einen Speicher, welcher ein ausführbares Computerprogramm speichert;
einen Prozessor, welcher mit dem Speicher zum Auswählen eines Ziel-Computerprogramms in Abhängigkeit des Fahrzeugtyps und zum Ausführen des Ziel-Computerprogramms gekoppelt ist, um eine Software-Kalibrierung auf der Kamera und dem Radarsensor des Fahrzeugs auszuführen.

5. Verbesserte Fahrerassistenzkalibrierungsvorrichtung für ein Fahrzeug nach Anspruch 4, wobei die Software-Kalibrierungsvorrichtung ferner Folgendes umfasst:
eine Anzeigeeinheit zum Anzeigen eines Kalibrierungsergebnisses der Kamera und des Radarsensors.

6. Verbesserte Fahrerassistenzkalibrierungsvorrichtung für ein Fahrzeug nach Anspruch 4, wobei der Prozessor auch konfiguriert ist, um das Computerprogramm in Abhängigkeit des Fahrzeugtyps zu aktualisieren.

7. Verbesserte Fahrerassistenzkalibrierungsvorrichtung für ein Fahrzeug nach Anspruch 3, wobei, wenn die verbesserte Fahrerassistenzkalibrierungsvorrichtung für ein Fahrzeug in einem Kamera-Kalibrierungsmodus der Software-Kalibrierung betrieben wird, die Höhe der Zielvorrichtung (100) konfiguriert ist, um an den Fahrzeugtyp angepasst zu werden, und wobei ein Kamerazielmuster auf dem Querträger (102) der Zielvorrichtung (100) fixiert wird.

8. Verbesserte Fahrerassistenzkalibrierungsvorrichtung für ein Fahrzeug nach Anspruch 3, wobei, wenn die verbesserte Fahrerassistenzkalibrierungsvorrichtung für ein Fahrzeug in einem Radarsensor-Kalibrierungsmodus der Software-Kalibrierung betrieben wird, ein Radarlaser auf der Zielvorrichtung (100) fixiert und konfiguriert wird, um Laserlicht zu emittieren und mit diesem ein Mittelpunkt des Radarsensors zu bestrahlen.

## Revendications

1. Dispositif d'étalonnage avancé d'assistance à la conduite pour un véhicule, comprenant un dispositif cible (100) ; et
une première pince de roue à laser (200) et une deuxième pince de roue à laser (300) disposées respectivement sur deux roues avant du véhicule ;
une première échelle (400) et une deuxième échelle (500) disposées sur le dispositif cible (100), qui sont réparties de manière symétrique sur les deux côtés d'un centre d'une traverse (102) du dispositif cible (100) ;
dans lequel une troisième échelle et une quatrième échelle sont disposées respectivement sur la première pince de roue à laser (200) et la deuxième pince de roue à laser (300), et un premier laser (600) et un deuxième laser (700) étant disposés sur la première échelle (400) et la deuxième échelle (500) et étant configurés pour irradier respectivement la troisième échelle et la quatrième échelle ; et
dans lequel un troisième laser et un quatrième laser sont disposés sur la première pince de roue à laser (200) et la deuxième pince de roue à laser (300) et sont configurés pour irradier respectivement la première échelle et la deuxième échelle.

2. Dispositif d'étalonnage avancé d'assistance à la conduite pour un véhicule selon la revendication 1, dans lequel la traverse (102) du dispositif cible (100) est horizontale lorsque le dispositif d'étalonnage avancé d'assistance à la conduite pour un véhicule fonctionne dans un mode d'étalonnage du matériel ; et
la distance entre le premier laser (600) et le deuxième laser (700) est adaptée à la largeur du véhicule, de sorte que la lecture de la troisième échelle est égale à la lecture de la quatrième échelle, et la lecture de la première échelle (400) étant égale à la lecture de la deuxième échelle (500).

3. Dispositif d'étalonnage avancé d'assistance à la conduite pour un véhicule selon la revendication 1, dans lequel :
lorsque le dispositif d'étalonnage avancé d'assistance à la conduite pour un véhicule fonctionne dans un mode d'étalonnage de logiciel, il comprend en outre :
un dispositif d'étalonnage de logiciel pour un étalonnage de logiciel sur une caméra et un capteur radar du véhicule ;
dans lequel le véhicule est couplé au dispositif d'étalonnage de logiciel par l'intermédiaire d'un connecteur de diagnostic

4. Dispositif d'étalonnage avancé d'assistance à la conduite pour un véhicule selon la revendication 3, dans lequel le dispositif d'étalonnage de logiciel comprend :
une mémoire stockant un programme informatique exécutable ;
un processeur couplé à la mémoire pour sélectionner un programme informatique cible en fonction du type du véhicule et pour exécuter le programme informatique cible pour effectuer un étalonnage de logiciel sur la caméra et le capteur radar du véhicule.

5. Dispositif d'étalonnage avancé d'assistance à la conduite pour un véhicule selon la revendication 4, dans lequel le dispositif d'étalonnage de logiciel comprend en outre :
une unité d'affichage pour afficher un résultat d'étalonnage de la caméra et du capteur radar.

6. Dispositif d'étalonnage avancé d'assistance à la conduite pour un véhicule selon la revendication 4, dans lequel le processeur est également configuré pour mettre à jour le programme informatique en fonction du type du véhicule.

7. Dispositif d'étalonnage avancé d'assistance à la conduite pour un véhicule selon la revendication 3, dans lequel, lorsque le dispositif d'étalonnage avancé d'assistance à la conduite pour un véhicule fonctionne dans un mode d'étalonnage de la caméra de l'étalonnage de logiciel, la hauteur du dispositif cible (100) est configurée pour être adaptée au type du véhicule, et dans lequel un motif cible de la caméra est fixé sur la traverse (102) du dispositif cible (100).

8. Dispositif d'étalonnage avancé d'assistance à la conduite pour un véhicule selon la revendication 3, dans lequel, lorsque le dispositif d'étalonnage avancé d'assistance à la conduite pour un véhicule fonctionne dans un mode d'étalonnage du capteur radar de l'étalonnage de logiciel, un laser à radar est fixé sur le dispositif cible (100) et est configuré pour émettre une lumière laser et pour l'irradier sur un centre du capteur radar.
